# EUROPEAN PATENT APPLICATION

(11) **EP 4 030 291 A1**
(43) Date of publication of application: **20.07.2022**
(21) Application number: 22152131.3
(22) Date of filing: 19.01.2022
(51) Int. Cl.: G06F 9/50, G06N 3/08

(54) **METHOD AND SYSTEM FOR GENERATING RESOURCE ALLOCATION RECOMMENDATIONS**

(30) Priority: 19.01.2021 IN 202121002501
(71) Applicant: Tata Consultancy Services Limited, Maharashtra (IN)
(72) Inventor: BARVE, Mahesh Damodar, 411057 Pune, Maharashtra (IN); HARDIKAR, Rahul Padmakar, 411057 Pune, Maharashtra (IN); KULKARNI, Revati Nitin, 411057 Pune, Maharashtra (IN)
(74) Representative: Goddar, Heinz J.

(57) **Abstract**

State of the art systems being used to perform resource allocation fail to consider dynamic resource requirements.' The disclosure herein generally relates to resource allocation in computing systems, and, more particularly, to a method and system for automated resource allocation in computing systems based on dynamically determined resource requirements. The system collects application instance level data by monitoring each application in the computing device being monitored, and generated a neural network model of the computing device by using the collected application instance level data. Working of the computing device is emulated using the neural network model to determine workload, and in turn resource requirements of the computing device, and accordingly one or more resource allocation recommendations are generated.

## Description

### CROSS-REFERENCE TO RELATED APPLICATIONS AND PRIORITY

The present application claims priority from Indian patent application no. 202121002501, filed on January 19, 2021.

### TECHNICAL FIELD

The disclosure herein generally relates to resource allocation in computing systems, and, more particularly, to a method and system for generating automated resource allocation recommendations for computing systems based on dynamically determined resource requirements.

### BACKGROUND

When a group of devices/equipment/components are deployed to perform specific tasks, each of the devices may be required to have specific resources to perform the assigned task(s). Resource requirements may be task specific and can be different for different tasks. A static approach of pre-assigning certain amount of resources to each of the devices has the disadvantage that this approach fails to accommodate changing resource requirements.

Dynamic resource allocation approach permits allocation of resources on a need to basis. In this approach, actual resource requirements are determined, and accordingly the resources are allocated. However, a disadvantage of the existing systems that perform the dynamic resource allocation is that they rely on factors such as number of applications running on a system, number of tasks being serviced and so on. In an implementation scenario, irrespective of the factors such as number of applications running on a system, number of tasks being serviced, the resource requirement may still vary, as in some dynamic scenarios the amount of data to be processed vary. Another disadvantage of the existing systems is that visibility of data at front end is high, which may cause security concerns. For example, consider applications that processes customer data in healthcare industry. In addition to physiological data, personal data such as but not limited to name, age, gender, and so on, of each of the customers of the applications. As the applications may have been managed by third-party service providers, exposing such personal data may pose serious data privacy/security issues.

### SUMMARY

Embodiments of the present disclosure present technological improvements as solutions to one or more of the above-mentioned technical problems recognized by the inventors in conventional systems.

For example, in one embodiment, a method of generating resource allocation recommendations is provided. In this method, a neural network model of a computing system is generated initially. Generating the neural network model involves the following steps. A plurality of application instances of each of a plurality of applications in the computing system are monitored, and instance level data from each of the plurality of application instances, of each of the plurality of applications, is collected using a dedicated set of agents for each of the plurality of application instances. Further, a plurality of local models of each of the plurality of applications are generated by a plurality of monitor modules dedicated to process the collected instance level data of each of the plurality of applications. Further, by processing the plurality of local models of each of the plurality of applications, a global model each of the plurality of applications is generated, using an application modeler. Then the neural network model representing the computing system is generated based on the global models of the plurality of applications in the computing system. Once the neural network model is generated, then resource requirements of the computing system are determined based on a determined workload of the computing system. The workload is determined by emulating working of the plurality of applications using the global model of the plurality of applications.

In another aspect, a system for generating neural network model for resource allocation recommendations is provided. The system includes a plurality of agents, a plurality of monitor modules, and an application modeler. The plurality of agents, the plurality of monitor modules, and the application modeler are configured by a plurality of instructions to collect data for resource allocation. The system generates a neural network model of a computing system from this collected data. Generating the neural network model involves the following steps. A plurality of application instances of each of a plurality of applications in the computing system are monitored, and instance level data from each of the plurality of application instances, of each of the plurality of applications, is collected using a dedicated set of agents for each of the plurality of application instances. Further, a plurality of local models of each of the plurality of applications are generated by a plurality of monitor modules dedicated to process the collected instance level data from each of the plurality of applications. Further, by processing the plurality of local models of each of the plurality of applications, a global model each of the plurality of applications is generated, using an application modeler. Then the neural network model representing the computing system is generated based on the global models of the plurality of applications in the computing system. Once the neural network model is generated, then resource requirements of the computing system are determined based on a determined workload of the computing system. The workload is determined by emulating working of the plurality of applications using the global model of the plurality of applications.

In yet another aspect, a non-transitory computer readable medium for generating resource allocation recommendations is provided. The non-transitory computer readable medium includes a plurality of instructions, which when executed, causes the resource allocation, and various steps in the resource allocation are explained below. In this method, a neural network model of a computing system is generated initially. Generating the neural network model involves the following steps. A plurality of application instances of each of a plurality of applications in the computing system are monitored, and instance level data from each of the plurality of application instances, of each of the plurality of applications, is collected using a dedicated set of agents for each of the plurality of application instances. Further, a plurality of local models of each of the plurality of applications are generated by a plurality of monitor modules dedicated to process the collected instance level data of each of the plurality of applications. Further, by processing the plurality of local models of each of the plurality of applications, a global model each of the plurality of applications is generated, using an application modeler. Then the neural network model representing the computing system is generated based on the global models of the plurality of applications in the computing system. Once the neural network model is generated, then resource requirements of the computing system are determined based on a determined workload of the computing system. The workload is determined by emulating working of the plurality of applications using the global model of the plurality of applications.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for resource allocation, according to some embodiments of the present disclosure.
FIG. 2 is a flow diagram depicting steps involved in the process of allocating resources using the system of FIG. 1, according to some embodiments of the present disclosure.
FIG. 3 illustrates a flow diagram depicting steps involved in the process of generating a neural network model, using the system of FIG. 1, in accordance with some embodiments of the present disclosure.
FIG. 4 is a block diagram of an example implementation of the system of FIG. 1, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

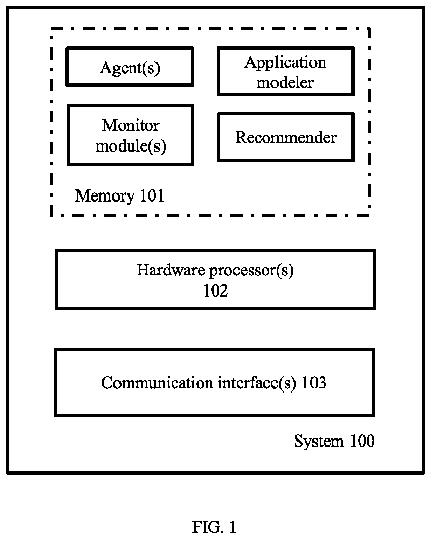

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates an exemplary system for resource allocation, according to some embodiments of the present disclosure. The system 100 includes one or more hardware processors 102, communication interface(s) or input/output (I/O) interface(s) 103, and one or more data storage devices or memory 101 operatively coupled to the one or more hardware processors 102. The one or more hardware processors 102 can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The communication interface(s) 103 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the communication interface(s) 103 can include one or more ports for connecting a number of devices to one another or to another server.

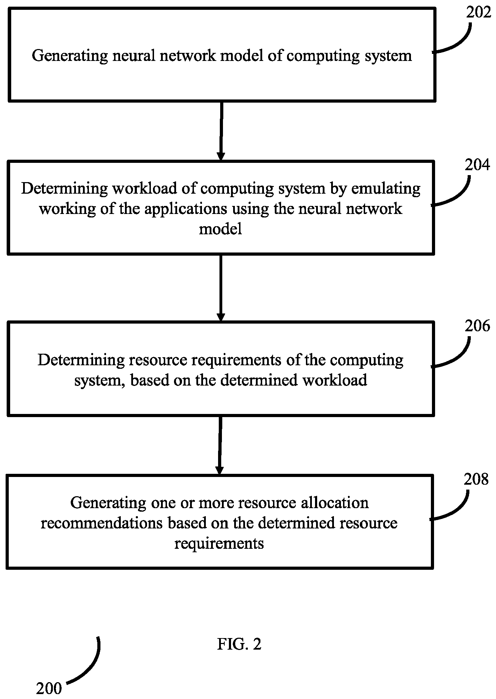

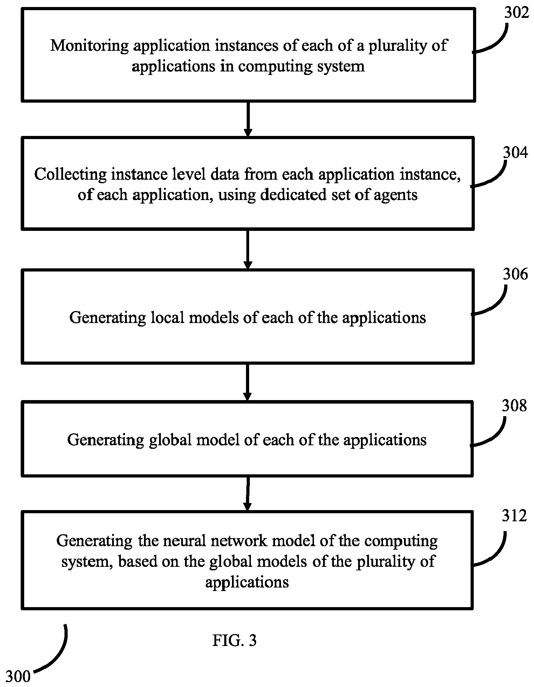

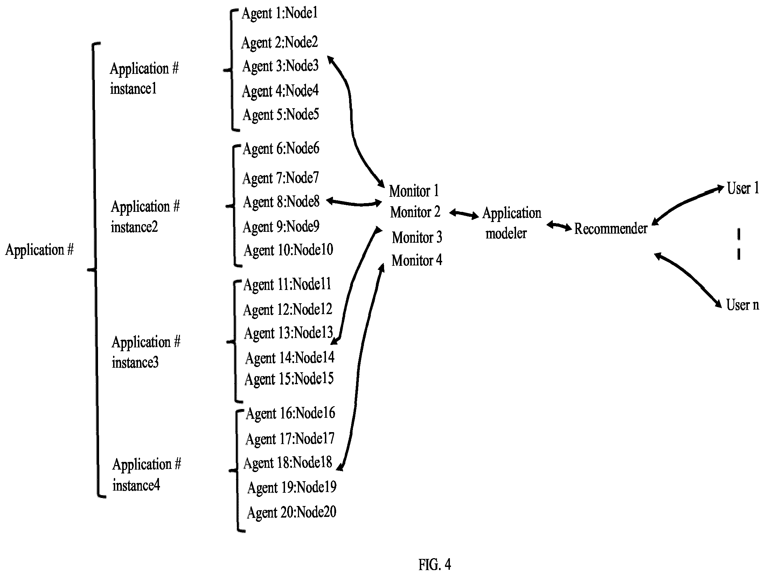

The memory 101 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more components (not shown) of the system 100 can be stored in the memory 101. The memory 101 is configured to store a plurality of operational instructions (or 'instructions') which when executed cause one or more modules of the memory 101 to perform various actions associated with the process of resource allocation being performed by the system 100, using the hardware processor(s) 102. The modules of the memory 101 are agents, application modeler, monitor module(s), and a recommender. The system 100 can be implemented in a variety of ways as per requirements. An example implementation of the system 100 is depicted in FIG. 4. Various steps involved in the process of resource recommendation being performed by the system 100 of FIG. 1 are depicted in FIG. 2 and FIG. 3, and are explained with reference to the hardware components depicted in FIG. 1 and FIG. 4.

FIG. 2 is a flow diagram depicting steps involved in the process of allocating resources using the system of FIG. 1, according to some embodiments of the present disclosure.

In order to perform the resource allocation for a computing system, the computing system is monitored using the system 100, and at step 202, a neural network model of the computing system is generated by the system100. Various steps involved in the process of generating the neural network model are depicted in FIG. 3 and are explained below.

The system implementation depicted in FIG. 4 may be used for monitoring the computing system. The computing system may contain a plurality of applications. Monitoring the computing system involves monitoring each of the plurality of applications, and monitoring each application involves monitoring different application instances of each of the applications at step 302.

A dedicated set of agents is used to monitor each of the application instances. For example, consider FIG. 4. Agents 1 to 5 are used for monitoring application instance 1, agents 6 to 10 are used for monitoring application instance 2, agents 11 to 15 are used for monitoring application instance 3 and so on. Likewise, all application instances of each application in the computing system are monitored using dedicated sets of agents. By monitoring the application instances, each of the agents collects application instance level data at step 304. The instance level data correspond to data from different application instances. Monitoring and collecting data at application instance level adds an additional layer of security as whole application data is not available to the components at the front end which may be being accessed by different users. Further, the application instance level data collected by each set of agents is sent to a corresponding monitor from a set of monitors.

Each monitor collects the instance level data from the corresponding set of agents, and then at step 306, generates local models of each of the applications. In an embodiment, each of the local models is a model of the application instance. The local model generated by each of the monitors is then transmitted to the application modeler. The application modeler, at step 308, generates a global model of the application, by combining the local models obtained from the monitors.

Using the steps 302 to 308, the system 100 generates the global model for all the applications being monitored. The recommender queries the global models and generates one or more recommendations, if any user request is received for the recommendations.

Further, at step 312, the system 100 generates the neural network by using the global models of all the applications in the computing system. The system may use any suitable machine learning technique to process data of the updated global models, to generate the neural network.

The generated neural network is then used to determine workload of the computing system, by emulating working of the applications using the neural network. The system 100 then determines resource requirements to handle the determined workload. Further, the system 100 compares the determined resource requirements with resource availability in the computing system, and based on difference between the determined resource requirements and the resource availability in the computing system, determines resource requirements at step 206.

Further, at step 208, one or more resource allocation recommendations are generated by the system 100. In an embodiment, another system that handles the resource allocation may use the resource allocation recommendations generated by the system 100 to allocate required resources to each of the computing systems. In another embodiment, a user may perform the resource allocation based on the resource allocation recommendations that are generated by the system 100. As the neural network model is updated from time to time, the resource requirements are updated, and accordingly the resource allocation recommendations are generated. The recommendations that are generated by the recommender may be provided to the user, using suitable user interface.

In various embodiments, the steps in method 200 may be performed in the same order as depicted in FIG. 2 or in any alternate order technically feasible. In another embodiment, one or more steps in method 200 may be omitted.

A use-case scenario is explained below:

For example, the system 100 may be configured to consider a scenario where the supercomputing users would like to estimate the best configuration e.g. number of processors, number of nodes, amount of memory, estimated time for running a particular application (e.g. Molecular dynamic, Molecular docking, Computational Fluid Dynamics, etc.) with a certain set of inputs (data points for the simulation). The user, based on input parameters for the simulation, rely on the recommendations provided by the system 100. The system 100 can generate estimates for number of nodes, number of processors, amount of memory, time estimates etc. as resource allocation recommendations depending on the applicability from the end users' perspective. The end user may use these recommendations to decide on running an application. The system 100 builds model of each of the applications running on the system, by considering the application instances. The system 100 is developed in such a way that the privacy of the user and user data for all the prior simulations running of the particular application is maintained. Further, the requisite information is derived from the running of the application and is used to build a model of the application. This ensures that adequate privacy is maintained with respect to the running of application by end users.

In another example, consider the following scenario. A set of users are running same application (say Molecular Docking) on a cluster. Each user has his own proprietary data for running simulations and may like to hide it from other users. Also consider that some users use the resources efficiently. The efficient usages are monitored and data is collected for the inputs such as number of processors, amount of memory, time taken to the complete the simulation, etc. By using the instance level monitoring and data collection approach, the system 100 is able to obtain data required to train a model which can provide recommendations for future simulations can be obtained by the system, while hiding the simulation characteristics. A user who wants to run a Molecular Docking application on a supercomputer/cluster can utilize the system 100 to obtain resource allocation recommendations. The user first connects to the system 100 and provides necessary details such as application name, the size of the input data, and such other details. The recommender of the system 100 queries the global model that has been generated by the system 100. The Global model helps the user to know the best configurations that can be used for running a particular simulation based on the past experience that is embedded in the global model. Simultaneously, following actions occur whenever a particular application instance is run on the system 100. The system 100 generates a model of the application using the monitors and agents designed to capture the runtime parameters of each of the instances of the application. Based on the captured parameters, a global model is made for each of the applications.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of resource allocation in computing systems. The embodiment, thus provides a mechanism to generate a neural network model representing working of a computing system being monitored. Moreover, the embodiments herein further provides a mechanism to determine resource requirements of the computing system based on the generated neural network and accordingly generate one or more resource allocation recommendations.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) of resource allocation, comprising:
generating (202) a neural network model of a computing system, via one or more hardware processors, wherein generating the neural network model comprising:
monitoring (302) a plurality of application instances of each of a plurality of applications in the computing system;
collecting (304) instance level data from each of the plurality of application instances, of each of the plurality of applications,
using a dedicated set of agents for each of the plurality of application instances;
generating (306) a plurality of local models of each of the plurality of applications, by a plurality of monitor modules dedicated to process the collected instance level data of each of the plurality of applications;
generating (308) a global model each of the plurality of applications, by processing the plurality of local models of each of the plurality of applications, using an application modeler;
and
generating (312) the neural network model representing the computing system, based on the global models of the plurality
of applications in the computing system;
determining (204) workload of the computing system by emulating working of the plurality of applications using the global models of the plurality of applications, via the one or more hardware processors;
determining (206) resource requirements of the computing system based on the determined workload, via the one or more hardware processors; and
generating (208) one or more resource allocation recommendations based on the determined resource requirements, via the one or more hardware processors.

2. The method as claimed in claim 1, wherein determining resource requirements of the computing system comprises:
determining resource requirement for managing the determined workload;
comparing the determined resource requirement with resource availability of the computing system; and
determining the resource requirements of the computing system based on the determined resource requirement and the resource availability of the computing system.

3. A system (100) for resource allocation, comprising:
one or more hardware processors;
a communication interface; and
a memory comprising a plurality of agents, a plurality of monitor modules, an application modeler, and a plurality of instructions,
wherein the plurality of instructions when executed by the one or more hardware processors, cause:
generating a neural network model of a computing system,
wherein generating the neural network model comprising:
monitoring a plurality of application instances of each of a plurality of applications in the computing system;
collecting instance level data from each of the plurality of application instances, of each of the plurality of applications, using a dedicated set of agents from the plurality of agents, for each of the plurality of application instances;
generating a plurality of local models of each of the plurality of applications, by the plurality of monitor modules dedicated to process the collected instance level data of each of the plurality of applications;
generating a global model each of the plurality of applications, by processing the plurality of local models of each of the plurality of applications, using the application modeler; and
generating the neural network model representing the computing system, based on the global models of the
plurality of applications in the computing system;
determining workload of the computing system by emulating working of the plurality of applications using the global models of the plurality of applications;
determining resource requirements of the computing system based on the determined workload; and
generating one or more resource allocation recommendations based on the determined resource requirements.

4. The system (100) as claimed in claim 3, wherein the system determines the resource requirements of the computing system by:
determining resource requirement for managing the determined workload;
comparing the determined resource requirement with resource availability of the computing system; and
determining the resource requirements of the computing system based on the determined resource requirement and the resource availability of the computing system.

5. A non-transitory computer readable medium for resource allocation, wherein the non-transitory computer readable medium comprising a plurality of instructions, which when executed, cause one or more hardware processors to:
generate a neural network model of a computing system, wherein
generating the neural network model comprising:
monitoring a plurality of application instances of each of a plurality of applications in the computing system;
collecting instance level data from each of the plurality of application instances, of each of the plurality of applications,
using a dedicated set of agents for each of the plurality of application instances;
generating a plurality of local models of each of the plurality of applications, by a plurality of monitor modules dedicated to process the collected instance level data of each of the plurality of applications;
generating a global model each of the plurality of applications,
by processing the plurality of local models of each of the plurality of applications, using an application modeler; and
generating the neural network model representing the computing system, based on the global models of the plurality
of applications in the computing system;
determine workload of the computing system by emulating working of the plurality of applications using the global models of the plurality of applications;
determine resource requirements of the computing system based on the determined workload; and
generate one or more resource allocation recommendations based on the determined resource requirements.

6. The non-transitory computer readable medium as claimed in claim 5, wherein the plurality of instructions when executed cause the one or more hardware processors to:
determine resource requirement for managing the determined workload;
compare the determined resource requirement with resource availability of the computing system; and
determine the resource requirements of the computing system based on the determined resource requirement and the resource availability of the computing system.
